# EUROPEAN PATENT APPLICATION

(11) **EP 2 463 169 A1**
(43) Date of publication of application: **13.06.2012**
(21) Application number: 10194106.0
(22) Date of filing: 08.12.2010
(51) Int. Cl.: B60W 20/00, B60K 6/26, B60K 6/48, B60W 10/06, B60W 10/08, B60W 10/26

(54) **A hybride vehicle**

(71) Applicant: Saab Automobile AB, 461 80 Trollhättan (SE)
(72) Inventor: Hilmersson, Mats, 431 69, Mölndal (SE); Lord, John, 424 72, Olofstorp (SE)
(74) Representative: Haag, Malina Anna

(57) **Abstract**

There is provided a hybrid electric vehicle comprising an engine (101) and only one electric machine (102) mechanically coupled to the gear system (100) for propelling the vehicle, wherein the maximum power of said electric machine (102) is greater than the maximum power of said engine (101). Further, the same mechanical path is used for providing mechanical motion to the transmission system (100) by said engine (101) and electric machine (102), as is used for receiving mechanical motion at said electric machine (102) for charging the energy storage device (123).

## Description

### Technical field

The present invention generally relates to the field of hybrid electric vehicles. In particular, it relates to hybrid electric vehicles comprising an engine, an electric machine and an energy storage device electrically connected to said electric machine.

### Background of the invention

Combining electric motors (EM) and internal combustion engines (ICE) in hybrid electric vehicles for reducing fuel consumption and CO₂ emissions is starting to become widespread. When designing such vehicles there are a number of requirements that have to be met. For example, consumers' demands on the drivability and performance of the vehicle, governmental regulations controlling the emissions from the different power sources, cost constraints and not least a design of the vehicle which is appealing to the intended market, at the same time as the vehicle body limits the space available for arranging the propelling and transmission systems.

The GETRAG Corporate Group has presented a hybrid electric vehicle transmission directly connectable an electric motor for propelling the vehicle by converting electric energy to mechanical motion, which motor may be powered by a battery pack. Moreover, the transmission system is also directly connectable to an internal combustion engine (ICE) for propelling the vehicle by converting liquid fuel to mechanical motion. Additionally, the ICE is directly coupled to a generator, which in turn is electrically connected to the battery pack and the power electronics for the propulsion motor, such that the batteries may be charged by the ICE and the propulsion motor can be provided with energy from the generator directly.

Hence, there is provided a vehicle which at low speeds or short ranges may be propelled by the electric motor. At higher speeds, here speeds over 80 km/h, the ICE may be used to increase the speed and/or the range and/or the efficiency of the vehicle, as well as charging the batteries independent of whether the electric motor is used or not.

However, there is a need for an alternative solution, in order to provide a vehicle which may be more cost effectively produced.

### Summary of the invention

In view of the above, an objective of the invention is to provide a hybrid electric vehicle which may be more cost effectively produced.

Available alternatives are limited by the strong general opinion within the field of hybrid electric vehicles, stating that there must be ways of charging the batteries at all times, i.e. also when the electric motor is propelling the vehicle. Otherwise the driver runs the risk of driving a vehicle, which suddenly runs out of power, with no ways of being able to move the vehicle except by towing it or charging the batteries by plugging it to e.g. wall electricity.

According to a first aspect of the invention there is provided a hybrid electric vehicle, comprising:
- an output member;
- a gear system;
- an electric machine, which is operably connected to provide a torque (60) to said output member via said gear system;
- an energy storage device electrically connected to said electric machine;
- an engine (101) operably connected to provide a torque (60) to said output member via said gear system, and operably connected to provide a torque (30) to said electric machine via said gear system;
wherein
- said electric machine (102) is arranged receive electric energy from said energy storage device (123), to convert said electric energy to a first torque and to provide said first torque to said output member via said gear system; and
- said electric machine (102) is arranged to receive a second torque from said engine (101) and to convert said second torque to electric energy;
- said energy storage device (123) is arranged to receive and store electric energy only from said electric machine (102); and
   the maximum power of said electric machine (102) is greater than the maximum power of said engine (101).

The above vehicle may be more cost effectively produced, as the same gear arrangement is used for propelling the vehicle, and for transmitting mechanical energy from said engine to said electric machine. Additionally, the same device which is used for converting electric energy from the energy storage device to mechanical motion, may also be used for converting mechanical motion to electric energy to be received and stored in the energy storage.

In other words, the inventors have realized that sufficient energy may be generated when using this gear arrangement, such that a separate charging path allowing for a charge of the batteries at all times is not necessary. The energy may be obtained e.g. by making use of regenerative breaking, but also by, to the greatest extent possible, running the engine at it's most energy efficient working points and/or running the engine at a higher power level than needed for the current road load and forwarding any thereby excessively generated power to the energy storage device for storing.

Consequently, the generator which is directly connected to the engine and its electric connection to the energy storage device for charging of the same in prior art systems may be dispensed with.

Hence, according to one embodiment the hybrid electric vehicle comprises only one electric machine operably connected to provide a torque to said output member via said gear system. Explained in more detail, the hybrid electric vehicle comprises only one electric machine which is connected to an energy storage device, such that these are operably connected to or able to continuously provide a torque to said output member via said gear system during a time interval of at least 1 minute or at least 2 minutes or at least 4 minutes or at least 5 minutes or at least 10 minutes. However, at normal operation the electric machine and the energy storage device are normally arranged to continously power the vehicle for least 1 hour or at least 2 hours.

According to one embodiment said electric machine comprises a transformation device arranged to transform electric energy to mechanical motion in a powering mode of operation, and to transform mechanical motion to electric energy in a charging mode of operation. Preferably, said transformation device is a motor/generator.

According to one embodiment, the energy storage device may be charged by regenerative breaking. In other words the electric machine of said hybrid electric vehicle is arranged to receive a torque e.g. a third torque from said engine output member and is arranged to convert said torque to electric energy.

In relation to this invention the term maximum peak power of a propelling machine is the maximum level of energy output from that machine, during an observation period of 20 seconds. Advantageously, the ratio between the maximum peak power of the electric machine and the maximum power of the engine is at least 1.1, or at least 1.2, or at least 1.5, or at least 1.7 or at least 2, or at least 3. This allows the vehicle to be propelled by the propelling electric machine at a vast speed range. Additionally, it allows the engine to be started by the electric machine.

According to one embodiment said transformation device comprises a rotatable member operably connected to said gear system, which rotatable member is arranged or operable to provide a first torque from the electric machine to said gear system, and to receive said second torque from said gear system. This is advantageous as it specifies how the same mechanical path to be used both for feeding energy from the energy storage device to the gear system, and for receiving energy from the gear system for storing in the energy storage device. Thus, reducing the number of parts needed.

The hybrid electric vehicle comprises an onboard energy storage device, i.e. any energy storage device that is mounted on the vehicle to which vehicle said electric machine is also mounted. For example, the energy storage device may be one or more batteries, battery packs or electrochemical cells. Other onboard energy storage devices, such as electromechanical flywheels or capacitors, which have the ability to provide, and/or store and dispense, sufficient electric power, may be used in combination with or in place of batteries. Further, said electric machine may also comprise power electronics e.g. performing AC/DC and DC/AC conversion.

Advantageously, an offboard power supply may also be used for charging the energy storage device. In relation to this invention an "offboard" power supply is a power supply that is not mounted on the vehicle, is not integral with transmission, and is operatively connected to the energy storage device only during recharging thereof, such as would occur in a plug-in hybrid vehicle application.

According to one embodiment said output member is a final output shaft. Further, said engine is an internal combustion engine.

In essence, there is provided a hybrid electric vehicle comprising an engine and only one electric machine, which are both mechanically coupled to the gear system for propelling the vehicle, wherein the maximum power of said electric machine is greater than the maximum power of said engine. Further, the same mechanical path is used for providing a mechanical motion to the transmission system by said engine and electric machine, as is used for receiving mechanical motion at said electric machine for charging the energy storage device. Thus, there is provided a hybrid electric vehicle, which may be cost effectively produced.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a schematic drawing illustrating a hybrid electric vehicle transmission according to a prior-art solution;
Fig. 2a is a schematic drawing illustrating a pure engine mode of operation of the vehicle according to the invention;
Fig. 2b is a schematic drawing illustrating a pure electric driving mode of operation of the vehicle according to the invention;
Fig. 2c is a schematic drawing illustrating a charging mode of operation of the vehicle according to the invention;
Fig. 2d is a schematic drawing illustrating a hybrid driving mode of operation of the vehicle according to the invention;
Fig. 2e is a schematic drawing illustrating a charging and driving mode of operation of the vehicle according to the invention;
Fig. 2f is a schematic drawing illustrating an engine starting mode of operation of the vehicle according to the invention;
Fig. 2g is a schematic drawing illustrating a regenerative braking mode of operation of the vehicle according to the invention.

### Detailed description of embodiments

The present invention relates to vehicles in general, but more specifically to passenger cars of a size arranged for between two to nine passengers, or two to five passengers, including a driver.

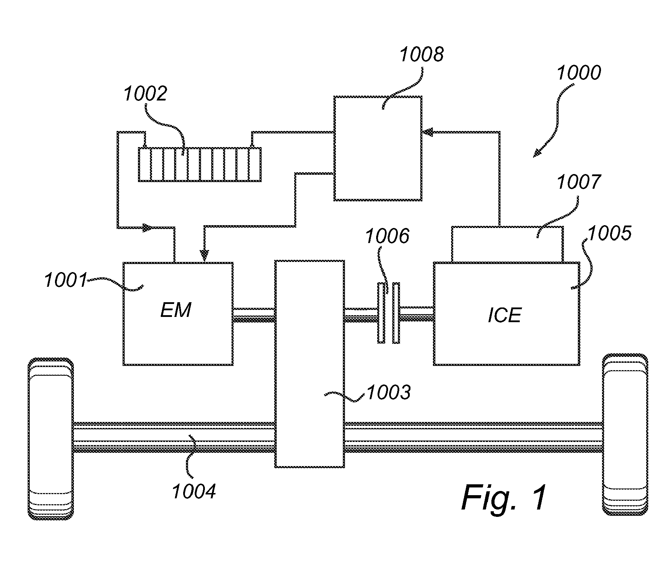

Figure 1 is a schematic drawing illustrating a prior-art solution of a vehicle 1000 comprising a hybrid electric transmission 1003, and a battery pack 1002 electrically connected to an electric propulsion motor 1001, which in turn is directly connected to the vehicle transmission 1003 for propelling the vehicle by converting electric energy to mechanical motion. Moreover, there is provided an internal combustion engine (ICE) 1005 which is also directly connected, by means of a clutch 1006 to the vehicle transmission 1003 for propelling the vehicle by converting liquid fuel to mechanical motion. Additionally, the ICE 1005 is directly coupled to a generator 1007, which in turn is electrically connected to the battery pack 1002 and the power electronics 1008 for the propulsion motor, such that said batteries may be charged by the ICE and the propulsion motor 1001 can be provided with energy from the generator 1007 directly. Hence, the vehicle may at low speeds or short ranges be propelled by the electric motor. At higher speeds, here speeds over 80 km/h, the ICE may be used to increase the speed and/or the range of the vehicle, as well as charging the batteries, independent of whether the electric motor is used or not.

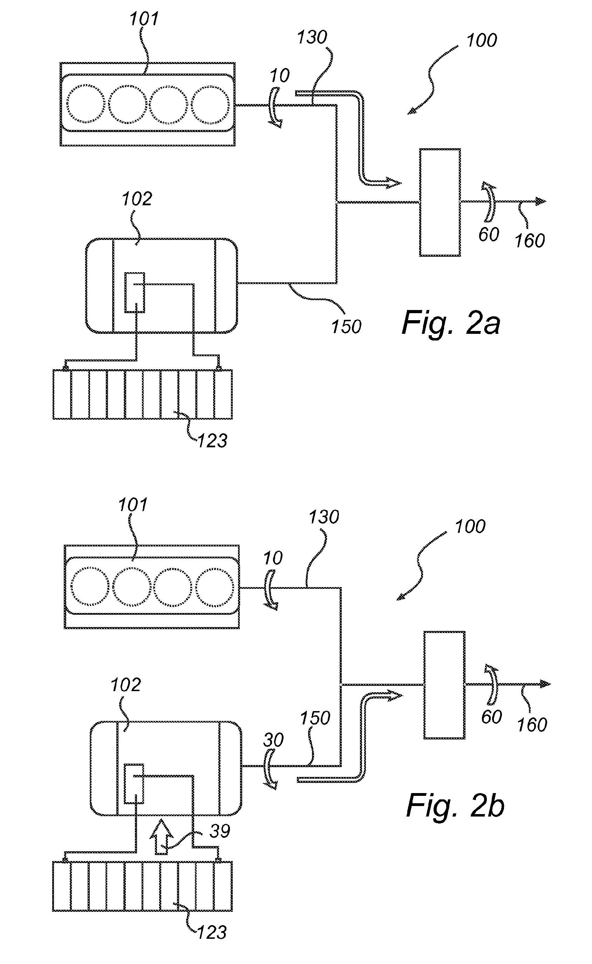

Figures 2a-g are a schematic drawings illustrating embodiments of the invention. According to Figure 2a there is provided a hybrid electric vehicle comprising a gear system 100, an internal combustion machine 101 or engine as well as an electric machine 102 or a motor/generator electrically connected to an energy storage device 123 or battery. As illustrated in Figure 2a, the engine 101 is operably connected to said gear system 100 for providing a first output torque 60 to said output member 160 via said gear system. In more detail, a first input torque 10 provided to a first input member 130 of said gear system 100, may be transmitted to said output member 160 by said gear system, thus providing an ICE driving mode of operation or an engine driving mode of operation.

Moreover, as illustrated in Figure 2b, the electric storage device 123 is arranged to provide electric energy 39 to said electric machine102 , and the electric machine 102 is arranged to convert the electric energy 39 received from said electric storage device 123 to a second torque 30. The electric machine is further arranged and to provide a second output torque 60 to said output member via said gear system. In more detail, the second input torque 30 provided to a second input member 150, e.g. a rotatable member or a rotatable shaft, may be transmitted to said output member 160 by said gear system. Thereby, providing an electric driving mode of operation.

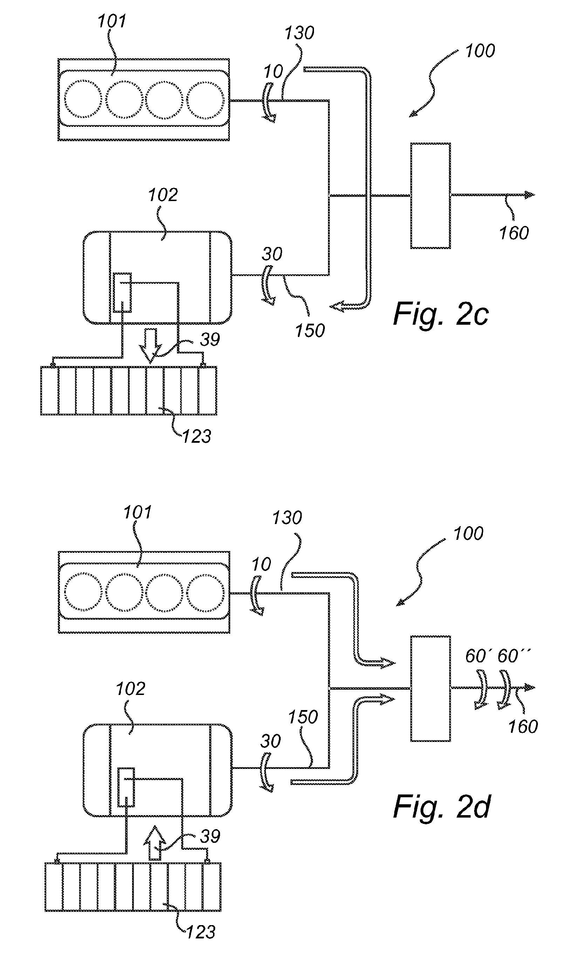

Additionally, as illustrated in Figure 2c, the engine 101 is operably connected to provide a first torque 10 to said electric machine via said gear system. In more detail, the first torque 10 provided to said first input member 130 of said gear system 100, may be transmitted to said second input member 150 by said gear system. Furthermore, the torque 30 received at said second input member 150 may be converted to electric energy 39 by said electric machine 102 and thereafter provided to said energy storage device 123 for storing. Consequently, there is provided a charging mode of operation.

As illustrated in Figure 2d, there is also provided a hybrid driving mode of operation, wherein said output member 160 simultaneously receives a first output torque 60' from said engine as described in relation to Figure 2a, as well as a second output torque 60" from said electric machine as described in relation to Figure 2b. In other words, a first input torque 10 from said first input member and a second input torque 30 from said second input member are simultaneously transmitted to said output member 160.

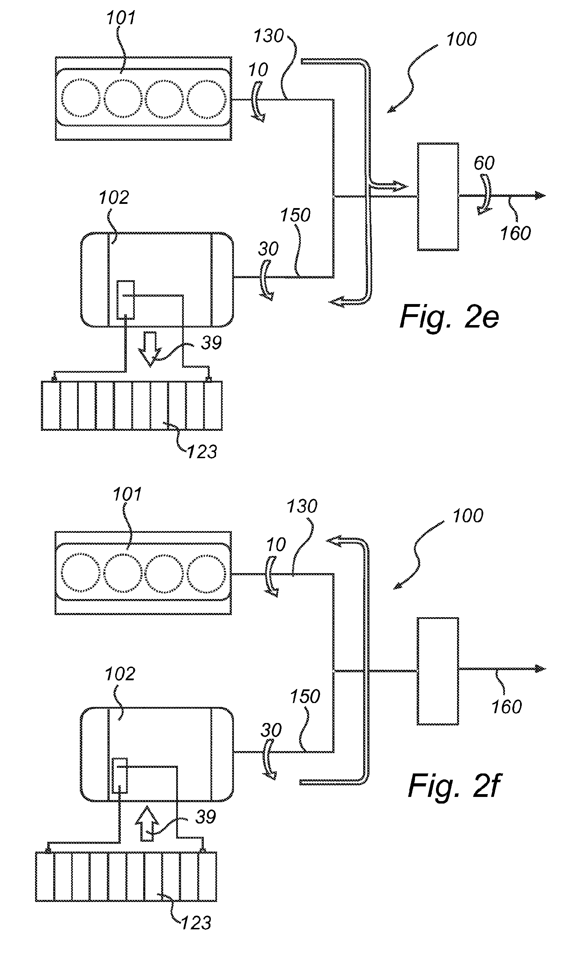

As illustrated in Figure 2e, there is provided a charging and driving mode of operation, wherein said output member 160 receives a torque 60 from said engine as described in relation to Figure 2a, simultaneously as the electric machine receives a second torque 30 from said engine as described in relation to Figure 2c. In other words, a torque 10 from said first input member, are simultaneously transmitted to said output member160 as a first torque portion 60, and to said second input member as a second torque portion to 30.

As illustrated in Figure 2f, there is provided an engine starting mode, wherein said first input member 130 receives a first torque 10 from said electric machine. In more detail, a first torque 30 provided to the second input member 150 of said gear system 100, may be transmitted to said first input member 130 by said gear system, and by e.g. a slip clutch action starting said engine. This mode of operation may be performed both at stand still, as well as while said electric machine provides a torque to said output member 160, as described in relation to Figure 2b.

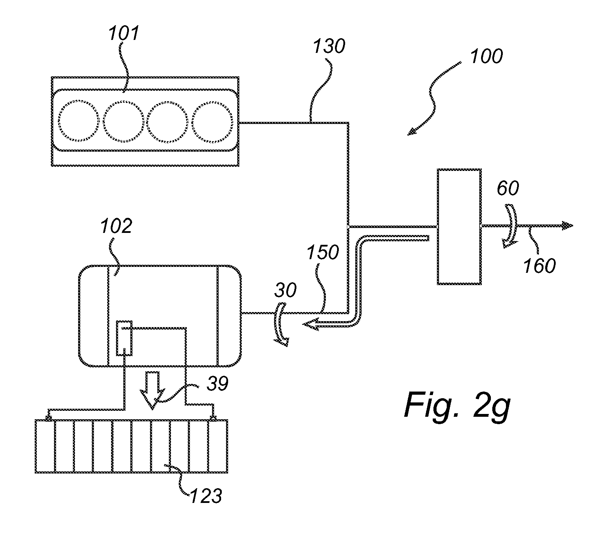

As illustrated in Figure 2g, there is provided a regenerative braking mode, wherein said second input member 150 receives a third torque 30 from said output member 160. In more detail, a third torque 60 provided to the output member 160 by the wheels at e.g. braking, may be transmitted to said second input member 150 by said gear system, and may be converted to electric energy 39 by said electric machine 102 and thereafter provided to said energy storage device 123.

Although exemplary embodiments of the present invention have been described herein, it should be apparent to those having ordinary skill in the art that a number of changes, modifications or alterations to the invention as described herein may be made. Thus, the above description of the various embodiments of the present invention and the accompanying drawings are to be regarded as non-limiting examples of the invention and the scope of protection is defined by the appended claims. Any reference signs in the claims should not be construed as limiting the scope.

## Claims

1. A hybrid electric vehicle, comprising:
- an output member (160);
- a gear system (100);
- an electric machine (102), which is operably connected to provide a torque (60) to said output member via said gear system;
- an energy storage device (123) electrically connected to said electric machine;
- an engine (101) operably connected to provide a torque (60) to said output member via said gear system, and operably connected to provide a torque (30) to said electric machine via said gear system;
wherein
- said electric machine (102) is arranged receive electric energy from said energy storage device (123), to convert said electric energy to a first torque and to provide said first torque to said output member via said gear system; and
- said electric machine (102) is arranged to receive a second torque from said engine (101) and to convert said second torque to electric energy;
- said energy storage device (123) is arranged to receive and store electric energy only from said electric machine (102); and
the maximum power of said electric machine (102) is greater than the maximum power of said engine (101).

2. A hybrid electric vehicle according to claim 1, comprising only one electric machine (102) operably connected to provide a torque to said output member via said gear system,

3. A hybrid electric vehicle according to claim 1, comprising only one electric machine (102) operably connected to continuously provide a torque to said output member via said gear system during a time interval of at least 5 minutes or at least 10 minutes.

4. A hybrid electric vehicle according to any one of the preceding claims, wherein said electric machine (102) is arranged to receive a third torque (30) from said engine output member and to convert said third torque to electric energy;

5. A hybrid electric vehicle according to any one of the preceding claims, wherein the ratio between the maximum peak power of said electric machine and the maximum power of said engine is at least 1.1, or at least 1.2, or at least 1.5, or at least 1.7 or at least 2, or at least 3.

6. A hybrid electric vehicle according to any one of the preceding claims, wherein said electric machine comprises a transformation device arranged to transform electric energy to mechanical motion in a driving mode of operation, and to transform mechanical motion to electric energy is a charging mode of operation, wherein said transformation device preferably is a motor/generator.

7. A hybrid electric vehicle according to claim 6, wherein said transformation device comprises a rotatable member operably connected to said gear system, which rotatable member is arranged to provide said first torque from said electric machine to said gear system, and to receive said second torque from said gear system.

8. A hybrid electric vehicle according to any one of the preceding claims, wherein said energy storage device is an on board battery device comprising at least one electrochemical cell.

9. A hybrid electric vehicle according to any one of the preceding claims, wherein said output member is a final output shaft.

10. A hybrid electric vehicle according to any one of the preceding claims, wherein said engine is an internal combustion engine.
